# EUROPÄISCHE PATENTSCHRIFT

(11) **EP 3 284 992 B1**
(45) Veröffentlichungstag und Bekanntmachung des Hinweises auf die Patenterteilung: **28.11.2018**
(21) Anmeldenummer: 16184570.6
(22) Anmeldetag: 17.08.2016
(51) Int. Cl.: F16L 3/10, F16L 3/22, F16L 3/24, F03D 80/80

(54) **VORRICHTUNG ZUR BEFESTIGUNG VON LEITUNGEN**
DEVICE FOR THE FIXING OF LINES
DISPOSITIF DE FIXATION DE CONDUITES

(43) Veröffentlichungstag der Anmeldung: 21.02.2018
(73) Patentinhaber: WALTER STAUFFENBERG GMBH & CO. KG, 58791 Werdohl (DE)
(72) Erfinder: Schulz, Matthäus, 57439 Attendorn (DE); Hartmann, Ralf, 58675 Hemer (DE)
(74) Vertreter: Patentanwälte Dörner & Kötter PartG mbB

(56) Entgegenhaltungen:
- EP-A1- 2 927 487
- WO-A1-2015/193841
- DE-A1-102012 007 416
- US-A1- 2003 173 470
- US-A1- 2015 222 106

## Beschreibung

Die Erfindung betrifft eine Vorrichtung zur Befestigung von Leitungen, insbesondere von Stromkabeln, Rohren oder Schläuchen nach dem Oberbegriff des Patentanspruchs 1.

Zur Befestigung von Leitungen, insbesondere Stromkabeln, Rohren und Schläuchen kommen regelmäßig so genannte Schellen zum Einsatz, die einen Schellenkörper umfassen, der aus einem thermoplastischen oder elastomeren Kunststoff oder auch aus Metall hergestellt ist. Der Schellenkörper ist häufig aus zwei miteinander über Schrauben verbindbaren Befestigungsteilen gebildet, die im montierten Zustand eine Durchführung zur Aufnahme der Leitung bilden.

Zur Verlegung und Festlegung von Kabeln und Leitungen in dem Turm einer Windkraftanlage kommen derzeit unterschiedlichste Ausgestaltungen von Schellen der vorgenannten Art zum Einsatz. Nachteilig an diesen Schellen ist, dass diese eine hohe Bauteilanzahl mit sich bringen, wodurch die Montage erschwert ist. Befestigungsvorrichtungen für Leitungen sind in der WO 2015/193841 A1, der US 2003/0173470 A1 sowie der EP 2 927 487 A1 beschrieben. Eine Loopscheibe zur Führung von Kabeln in Windturbinen ist in der US 2015/0222106 A1 offenbart.

Hier will die Erfindung Abhilfe schaffen. Der Erfindung liegt die Aufgabe zu Grunde, eine Vorrichtung zur Befestigung von Leitungen, insbesondere Stromkabeln, Rohren oder Schläuchen bereit zu stellen, die eine geringe Bauteilanzahl aufweisen und die insbesondere auch zur effizienten Festlegung von Leitungen innerhalb des Turms einer Windkraftanlage geeignet sind. Gemäß der Erfindung wird diese Aufgabe durch eine Vorrichtung mit den Merkmalen des kennzeichnenden Teils des Patentanspruchs 1 gelöst.

Mit der Erfindung ist eine Vorrichtung zur Befestigung von Leitungen, insbesondere Stromkabeln, Rohren oder Schläuchen bereitgestellt, die eine geringere Bauteilanzahl aufweist und die eine effiziente Montage von Leitungen insbesondere auch innerhalb des Turms einer Windkraftanlage ermöglicht. Hierzu ist die Vorrichtung von jeweils einem Kragarm einer Loopscheibe mit einem kreisförmigen Tragkörper aufgenommen, an dem wenigstens zwei Kragarme radial sternförmig angeformt sind, wodurch eine beabstandet zueinander angeordnete Führung von Kabelsträngen ermöglicht ist. An der Vorrichtung ist ein Klemmstück sowie wenigstens ein mit diesem verbindbarer Spanngurt vorgesehen, wobei das Klemmstück wenigstens eine Einsenkung zur Aufnahme einer Leitung aufweist und wobei der Spanngurt einen Spannverschluss aufweist, über den der Spanngurt zumindest bereichsweise um das Klemmstück wenigstens eine Einsenkung überdeckend verspannbar ist.

Bevorzugt ist der Spanngurt an einem Ende mit einer Verzahnung versehen, die mit einem Spannteil des Spannverschlusses zusammenwirkt. Hierdurch ist ein Schnellverschluss gebildet, wodurch die Kabelfestlegung erleichtert ist.

In Weiterbildung der Erfindung ist der Spanngurt einteilig ausgebildet und weist an seinem einen Ende den Spannverschluss auf und ist an seinem anderen Ende mit der Verzahnung versehen. Hierdurch ist eine Festlegung von Leitungen mit Hilfe von lediglich zwei Bauteilen ermöglicht. Verbindungsschrauben zur Montage der Vorrichtung sind ist nicht erforderlich.

In weiterer Ausgestaltung der Erfindung ist der Spannverschluss mit einem Verbindungsteil versehen, mit dem er an dem Klemmstück befestigbar ist. Hierdurch ist der Spanngurt unverlierbar an dem Klemmstück gehalten, wodurch die Bauteiltiefe auf eins reduziert ist. Der Montageaufwand ist hierdurch weiter reduziert.

In einer alternativen Ausgestaltung der Erfindung ist der Spanngurt aus zwei Teilgurten gebildet, die jeweils an einem ersten Ende mit einem Verbindungsteil versehen sind, mit dem Sie an dem Klemmstück befestigbar sind, wobei ein Teilgurt an seinem zweiten Ende den Spannverschluss aufweist und der andere Teilgurt an seinem zweiten Ende mit der Verzahnung versehen ist. Beide Teilgurte sind in dieser Ausgestaltung wiederum unverlierbar an dem Klemmstück befestigbar, wodurch die Bauteiltiefe auf eins reduzierbar ist. Auch hier ist der Montageaufwand minimiert.

In Weiterbildung der Erfindung weist wenigstens ein Verbindungsteil einen Zylinderstift auf, der in eine hierfür in dem Klemmstück angeordnete Rastnut einrastbar ist. Hierdurch ist eine einfache, lösbare Verbindung eines Spanngurts mit dem Klemmstück erzielt.

In Weiterbildung der Erfindung ist das Spannteil des Spannverschlusses durch einen schwenkbar angeordneten Spannhebel gebildet, der endseitig zum Eingriff in die Verzahnung des Spanngurts mit dieser korrespondierend ausgebildet ist. Hierdurch ist eine zuverlässige, nahezu stufenlose Verspannung von in der Einsenkung des Klemmstücks angeordneten Kabeln ermöglicht. Über den Spannhebel ist dabei eine Verspannung mit geringem Kraftaufwand ermöglicht. Weiterhin ermöglicht eine solche Anordnung ein werkzeugfreies ggf. erforderliches Nachspannen der Vorrichtung.

Bevorzugt ist beabstandet zur Schwenkachse des Spannhebels eine Sperrraste zum Eingriff in die Verzahnung des Spanngurts schwenkbar und bevorzugt gegen die Verzahnung eines vom Spannverschluss aufgenommenen Spanngurtabschnitts vorgespannt angeordnet und derart ausgebildet, dass ein Verschwenken nur bei Bewegung des Spanngurts in Spannrichtung ermöglich ist, wohingegen entgegen der Spannrichtung des Spanngurts eine Blockierung erzielt ist. Hierdurch ist ein Zurückrutschen des Spanngurts nach Verspannung über den Spannhebel verhindert.

In einer alternativen Ausgestaltung der Erfindung ist das Spannteil des Spannverschlusses durch eine drehbar angeordnete Zahnwalze gebildet, deren Verzahnung mit der Verzahnung des Spanngurts korrespondiert. Hierbei erfolgt die Verspannung durch Drehung der Zahnwalze, die vorzugsweise über einen Drehmomentschlüssel erfolgen kann. Auf diese Weise ist eine Verspannung mit einer definierten Spannkraft ermöglicht.

In Weiterbildung der Erfindung ist ein Sperrhebel schwenkbar angeordnet, der in die Verzahnung der Spannwalze bevorzugt gegen diese vorgespannt eingreift. Dabei ist der Sperrhebel derart ausgebildet, dass eine Rotation der Spannwalze nur in Bewegungsrichtung des Spanngurts in Spannrichtung ermöglich ist, wohingegen die Rotation der Spannwalze entgegen der Spannrichtung des Spanngurts blockiert ist. Hierdurch ist wiederum einem Zurückrutschen des Spanngurts nach dessen Verspannung durch Drehung der Spannwalze entgegengewirkt.

In Ausgestaltung der Erfindung ist das Klemmstück drehbar und/oder verschiebbar mit einem Beschlag zur Befestigung an einer Wand verbunden. Hierdurch ist eine Bestückung einer Wand, beispielsweise der Turmwand einer Windkraftanlage im Vorfeld der Leitungsverlegungen ermöglicht. Im Zuge der Leitungsverlegungen ist dann die endgültige Positionierung des Klemmstücks durch Drehen und oder Schieben innerhalb des Beschlags ermöglicht. Dabei ist bevorzugt ein Arretierteil zur Festlegung des Klemmstücks in einer Dreh- oder Schiebestellung angeordnet, wodurch eine einfache Fixierung des Klemmstücks ohne das Erfordernis von zusätzlichem Werkzeug ermöglicht ist.

In Ausgestaltung der Erfindung ist das Arretierteil durch einen Federstift gebildet, der in eine in dem Klemmstück hierzu angeordnete Stiftaufnahme einbringbar ist. Hierdurch ist eine einfache manuelle Arretierung des Klemmstücks an dem Beschlag ermöglicht.

In Weiterbildung der Erfindung sind an der Loopscheibe diametral gegenüberliegend zwei Führungsarme angeordnet, die jeweils in eine Führung zweier gegenüberliegend angeordneter, axial zu Loopscheibe verlaufender Führungsschienen eingreifen. Die Führungsschienen sind innerhalb des Turms einer Windkraftanlage festlegbar. In dieser Anordnung ist die Loopscheibe dann axial verschiebbar, jedoch drehfest positionierbar.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung einer Vorrichtung zur Befestigung von Leitungen mit angedeutetem Leitungsverlauf
a) in dreidimensionaler Darstellung;
b) in Seitenansicht;
c) in einer Ansicht von vorne;
d) in Längsschnittdarstellung;
e) in einer räumlichen Längsschnittdarstellung;
f) in einer weiteren räumlichen Längsschnittdarstellung;
g) in Explosionsdarstellung;

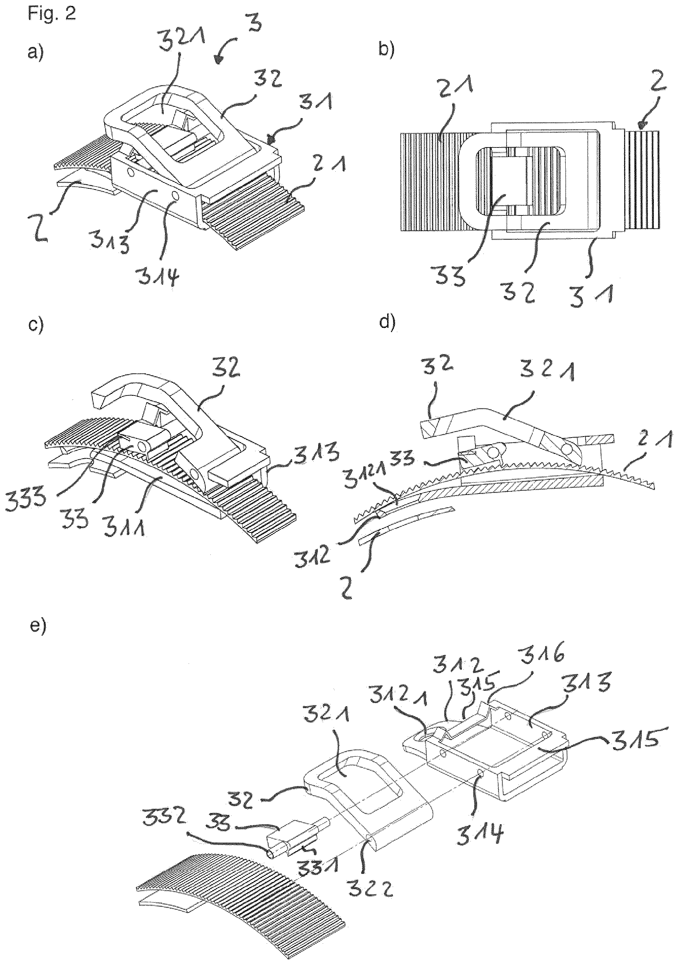

- Figur 2: die Detaildarstellung des Spannverschlusses der Vorrichtung aus Figur 1
a) in räumlicher Darstellung;
b) in der Draufsicht;
c) in räumlicher Längsschnittdarstellung;
d) in einer weiteren Längsschnittdarstellung;
e) in Explosionsdarstellung;
- Figur 3: die schematische Darstellung eines Spannverschlusses in einer weiteren Ausführungsform
a) in räumlicher Darstellung;
b) in einer räumlichen Schnittdarstellung;
c) in der Draufsicht;
d) in der Ansicht von vorne;
e) in Explosionsdarstellung;
- Figur 4: die schematische Darstellung einer mit Befestigungsvorrichtungen gemäß Figur 1 bestückten Loopscheibe;
- Figur 5: die schematische Darstellung einer vertikal verschiebbar geführten Loopscheibe;
- Figur 6: die schematische Darstellung einer vertikal verschiebbar geführten Loopscheibe in einer weiteren Ausführungsform und
- Figur 7: die schematische Darstellung einer Leitungsführung innerhalb des Turms einer Windkraftanlage.

Die als Ausführungsbeispiel gewählte Vorrichtung zur Befestigung von Leitungen, insbesondere von elektrischen Leitungen innerhalb des Turms einer Windkraftanlage ist gebildet aus einem Klemmstück 1, das einen Spanngurt 2 aufnimmt, der mit einem Spannverschluss 3 gebildet ist und über ein Verbindungsteil 4 unverlierbar an dem Klemmstück 1 gehalten ist. Zur Befestigung an einer Wand ist das Klemmstück 1 mit einem Beschlag 5 verbunden.

Das Klemmstück 1 ist im Ausführungsbeispiel als Spritzgussteil ausgebildet, das aus Gründen der Gewichtsreduzierung als Stegkonstruktion ausgeführt ist. Das Klemmstück 1 besteht aus einem Grundkörper 11, das die Form eines dreiseitigen geraden Prismas aufweist und an dessen Kanten jeweils ein Flügel 12 angeformt ist. Die nach außen gerichteten Mantelflächen 121 der Flügel 12 bilden dabei jeweils Kreisringabschnittsflächen eines gemeinsamen Kreisbogens aus. Zwischen den Flügeln 12 sind jeweils konisch nach außen sich erweiterte Einsenkungen 13 zur Aufnahme von Leitungen 7 ausgebildet. Mittig sind die Flügel 12 jeweils mit einer radial sich erstreckenden Rastnut 15 versehen. Zur Befestigung des Klemmstücks 1 an dem Beschlag 5 ist weiterhin der Grundkörper 11 mittig mit einer Bohrung 14 versehen.

Der Spanngurt 2 ist im Ausführungsbeispiel in Form eines Blechbandes ausgebildet, das an einem endseitigen Abschnitt mit einer Verzahnung 21 versehen ist. An seinem der Verzahnung 21 gegenüberliegenden Ende ist an dem Spanngurt 2 ein Spannverschluss 3 befestigt.

Im Ausführungsbeispiel ist der Spanngurt 2 zwischen dem mit der Verzahnung 21 versehene Endabschnitt und dem Spannverschluss 3 mit einer Mantelleiste 22 versehen. Die Mantelleiste 22 ist aus Gummi hergestellt und in Art eines C-Profils ausgebildet. Dabei liegt die Grundfläche der Mantelleiste 22 an der der Verzahnung 21 entgegengerichteten Unterseite des Spanngurts 2 an, wobei die Schenkel 221 der Mantelleiste 22 den Spanngurt 2 seitlich umgreifen.

Der Spannverschluss 3 besteht im Wesentlichen aus einem Gehäuse 31, in dem beabstandet zueinander ein Spannhebel 32 sowie eine Sperraste 33 schwenkbar gelagert sind. Das Gehäuse 31 ist im Ausführungsbeispiel als Blechstanzbiegeteil ausgeführt. Es weist einen Boden 311 auf, der seitlich in zwei gegenüberliegende Seitenwände 313 übergeht, welche Seitenwände 313 über parallel zum Boden 311 angeformte Stege 315 miteinander verbunden sind. In die Seitenwände 313 sind beabstandet zueinander diametral gegenüberliegend jeweils zwei Bohrungen 314 zur schwenkbaren Lagerung von Spannhebel 32 und Sperrraste 33 eingebracht. An den Boden 311 des Gehäuses 31 ist weiterhin an einer Querseite eine Lasche 312 angeformt, die sich an die durch den Boden 311 gebildete Fläche nahtlos anschließt. Die Lasche 312 weist eine Bohrung 3121 zur Befestigung des Gehäuses 31 an dem Spanngurt 2 auf. Der der Lasche 312 zugewandte Steg 315 ist mit zwei beabstandet zueinander angeordneten Vorsprüngen 316 versehen, die durch Knickabschnitte des Steges 315 gebildet sind und in Form eines Satteldachs ausgeformt sind.

Der Spannhebel 32 ist im Wesentlichen rechteckförmig ausgebildet und mit einem im Wesentlichen quaderförmigen Ausbruch 321 versehen, dessen Ecken abgerundet ausgebildet sind. Im Bereich des oberen Drittels des Ausbruchs 321 ist der Spannhebel 32 abgewinkelt. Die Breite des Ausbruchs 321 entspricht im Wesentlichen dem äußeren Abstand der Vorsprünge 316 des der Lasche 312 zugewandten Steges 315 des Gehäuses 31, derart, dass der Spannhebel 32 über den Ausbruch 321 die Vorsprünge 316 umfassend einrastbar ist. An seinem dem abgewinkelten Teil des Spannhebels 32 entgegengesetzten Ende sind in den Spannhebel 32 seitlich diametral zueinander zwei Bohrungen 322 zur Aufnahme einer - nicht dargestellten - Achse zur schwenkbaren Lagerung des Spannhebels 32 in den Bohrungen 314 des Gehäuses 31 eingebracht. An seinem den Bohrungen 322 zugewandten Ende ist der Spannhebel 32 keilförmig zum Eingriff in die Verzahnung 21 des Spanngurts 2 ausgebildet.

Die Sperrraste 33 ist im Wesentlichen quaderförmig ausgebildet und endseitig mit einem Keilstück 331 zum Eingriff in die Verzahnung 21 des Spanngurts 2 versehen. In Höhe des Keilstücks 331 sind an die Sperrraste 33 diametral zueinander zwei seitliche, hohlzylindrisch ausgebildete Achsen 332 angeformt. Auf ihrer den Achsen 332 gegenüberliegenden Seite weist die Sperrraste 33 weiterhin einen winklig angestellten Führungsschlitz 330 auf, der sich über die gesamte Breite der Sperrraste 33 erstreckt.

Der Spannhebel 32 ist über - nicht dargestellte - Achsen, welche in die Bohrungen 322 eingreifen und in die Bohrungen 314 des Gehäuses 31 sich erstrecken, schwenkbar mit dem Gehäuse 31 verbunden. Die Sperrraste 33 ist über ihre Achsen 332, welche in die den Vorsprüngen 316 am nächsten angeordneten Bohrungen 314 des Gehäuses 31 hineinragen schwenkbar mit diesem verbunden. Dabei liegt der zwischen den Vorsprüngen 316 begrenzte Abschnitt des Steges 315 innerhalb des Führungsschlitzes 333 der Sperraste 33, wobei die Höhe des Führungsschlitzes 333 derart dimensioniert ist, dass eine Schwenkbewegung der Sperrraste 33 um die Achse 332 ermöglicht ist.

Der mit der Verzahnung 21 versehene Endabschnitt des Spanngurts 2 kann zwischen dem Boden 311 und den Stegen 315 durch das Gehäuse 31 hindurchgeführt werden, wobei das keilförmige Ende des Spannhebels 32 sowie das Keilstück 331 der Sperrraste 33 entlang der Flanken der Verzahnung 21 entlanggleiten. Durch Verschwenken des Spannhebels 32 ist eine Förderung des Spanngurts 2 in die Einschubrichtung ermöglicht, wodurch ein Verspannen des Spanngurts 2 ermöglicht ist. Bei Bewegung des mit der Verzahnung 21 versehen Endabschnitts des Spanngurts 2 in die entgegengesetzte Richtung greift das Keilstück 331 in die Verzahnung 21 ein, wodurch die Bewegung des Spanngurts 2 in diese Richtung blockiert ist. Nach erfolgter Verspannung des Spanngurts 2 kann der Spannhebel 32 durch Verrasten des Ausbruchs 321 mit den Vorsprüngen 316 des Steges 315 des Gehäuses 331 festgelegt werden.

Das Verbindungsteil 4 ist als im Wesentlichen U-förmig ausgebildetes Blechbiegeteil hergestellt, dessen gegenüberliegend angeordnete Schenkel 41 jeweils mit einem Langloch 42 versehen sind. Zwischen den Schenkeln 41 ist ein Zylinderstift 43 positioniert, der beidseitig zentrisch zu dessen Mittelachse jeweils mit einer Gewindebohrung 44 versehen ist. Der Zylinderstift 43 ist mittels - nicht dargestellter - Schrauben, die durch ein jeweiliges Langloch 42 geführt in die Gewindebohrungen 44 des Zylinderstifts 43 eingeschraubt sind, befestigt. Seitlich ist an das Verbindungsteil 4 eine Lasche 45 angeformt, die mit einer Bohrung 451 versehen ist.

Das Verbindungsteil 4 ist über die Lasche 45 mit der Lasche 312 des Gehäuses 31 des Spannverschlusses 3 verbunden, wobei das der Verzahnung 21 gegenüberliegende Ende des Spanngurts 2 zwischen Verbindungsteil 4 und Spannverschluss 3 angeordnet ist. Die Verbindung von Verbindungsteil 4 und Spannverschluss 2 erfolgt im Ausführungsbeispiel über einen durch die Bohrung 451 der Lasche 45 durch den Spanngurt 2 sowie durch die Bohrung 3121 der Lasche 312 des Gehäuses 31 geführten - nicht dargestellten - Niet. Der Zylinderstift 43 des Verbindungsteils 4 ist in die Rastnut 15 des Klemmstücks 1 eingebracht, wodurch das Verbindungsteil 4 mit dem mit diesem verbundenen Spanngurt 2 sowie dem Spanverschluss 3 unverlierbar an dem Klemmstück 1 gehalten ist. Rastnut 15 und Zylinderstift 43 sind derart korrespondierend miteinander ausgebildet, dass eine kraftschlüssige Verbindung des Zylinderstifts 43 in der Rastnut 15 erzielt ist.

Der Beschlag 5 ist im Ausführungsbeispiel als Stanzbiegeteil ausgebildet. Es weist einen Tragarm 51 auf, der mit zwei beabstandet zueinander angeordneten Bohrungen 52 versehen ist. Der Tragarm 51 ist an eine rechtwinklig angestellte Anschlagleiste 54 angeformt, die zur Befestigung des Beschlags 5 an einer Wand mit Bohrungen 55 versehen ist.

Das Klemmstück 1 ist über eine Achse 16, die durch die Bohrung 14 des Grundkörpers 11 des Klemmstücks 1 sowie durch die dem freien Ende des Tragarms 51 zugewandte Bohrung 52 des Verbindungsteils 4 geführt ist, drehbar verbunden. Durch die weitere in dem Tragarm 51 angeordnete Bohrung 52 ist ein Federstift 53 geführt, der in eine Rastnut 15 eines Flügels 12 des Klemmstücks 1 hineinragt. Bei eingezogenem Federstift 53 ist das Klemmstück 1 um die Achse 16 frei rotierbar. An dieser Stelle ist anzumerken, dass die Rastnuten 15 der Flügel 12 des Klemmstücks 1 identisch ausgebildet sind, derart, dass sie sowohl ein Einrasten des Zylinderstifts 43 des Verbindungsteils 4, als auch ein Einschieben des Federstifts 53 des Beschlags 5 ermöglichen. Hierdurch ist eine Fixierung des Klemmstücks 1 in drei um 120° versetzt zueinander angeordneten Drehpositionen ermöglicht. Nach erfolgter Drehpositionierung des Klemmstücks 1 an dem Beschlag 5 ist eine Befestigung des Verbindungsteils 4 über den Zylinderstift 43 in einer der beiden übrigen freien Rastnuten 15 des Klemmstücks 1 ermöglicht.

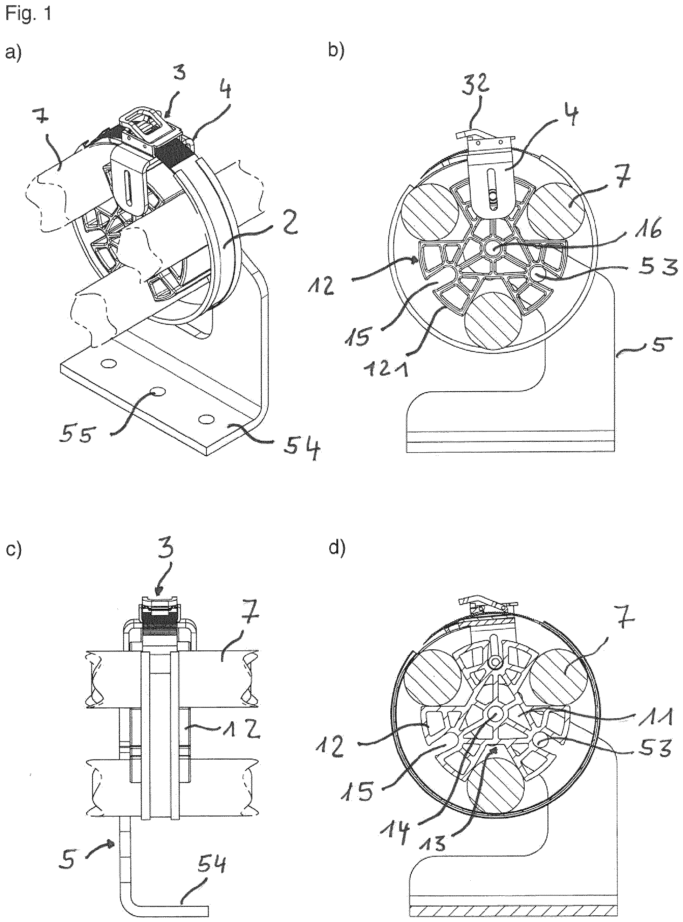

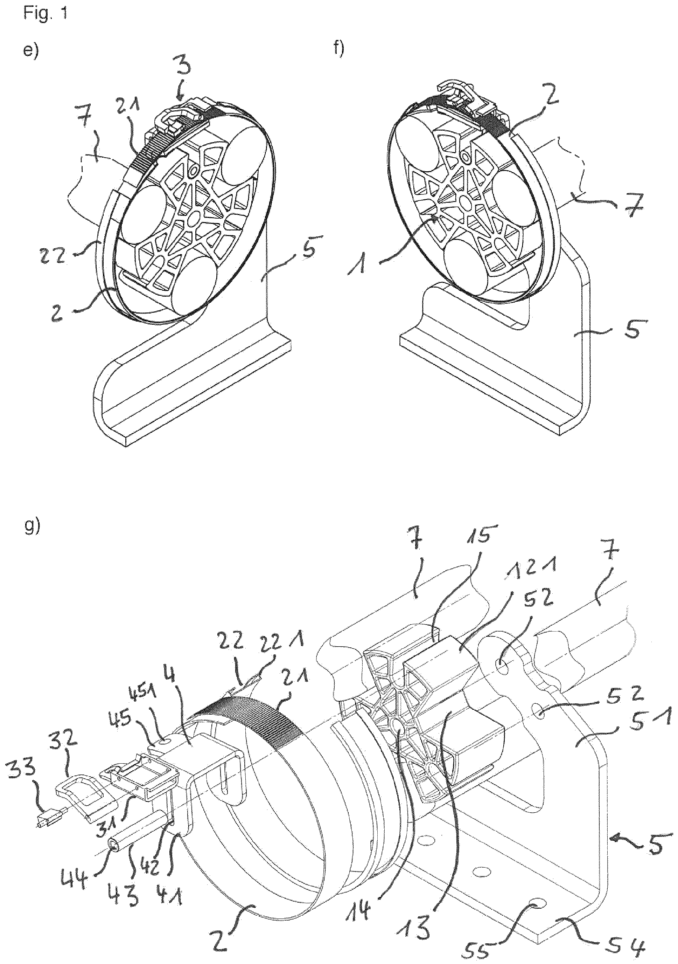

In Figur 1 ist eine beispielhafte Fixierung von drei schematisch angedeuteten Leitungen 7 dargestellt. Hierbei ist jeweils eine Leitung 7 in eine Einsenkung 13 des Klemmstücks 1 eingebracht, welche Leitungen 7 die Einsenkungen 13 überragen. Der über das Verbindungsteil 4 endseitig in dem Klemmstück 1 fixierte Spanngurt 2 ist um die in den Einsenkungen 13 liegenden Leitungen 7 herumgeführt und mit seinem mit der Verzahnung 21 versehenen Endabschnitt in den Spannverschluss 3 eingeführt. Nachfolgend ist der Spanngurt über den Spannhebel 32 um die Leitungen 7 verspannt.

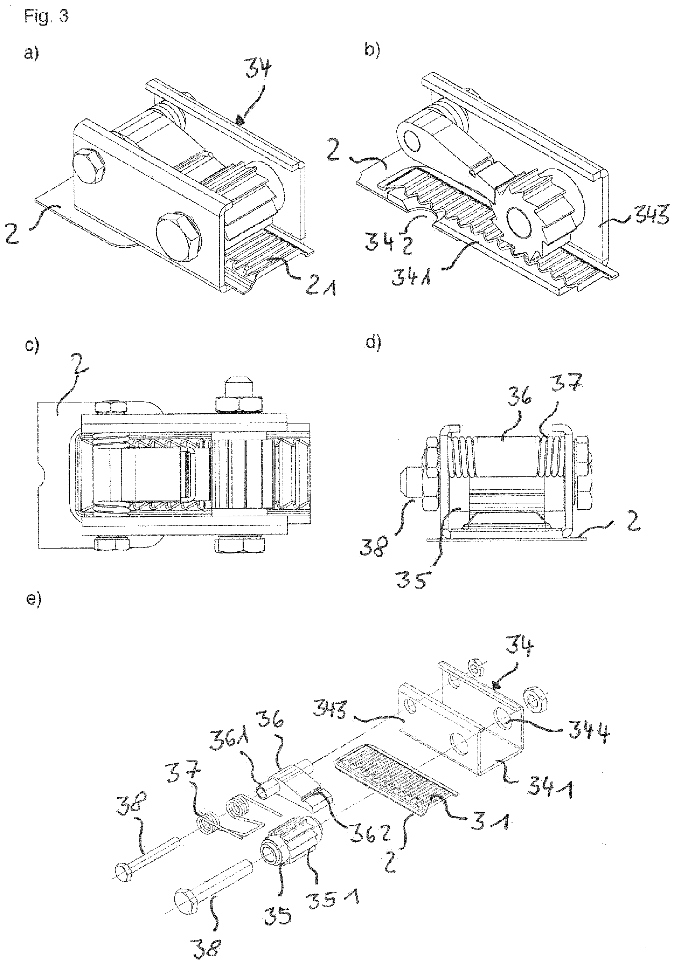

In Figur 3 ist eine alternative Ausführung eines Spannverschlusses 3' dargestellt. Der Spannverschluss 3' ist wiederum aus einem Boden 341 gebildet, der in gegenüberliegend angeordnete Seitenwände 343 übergeht, wobei die Seitenwände 343 an ihrem freien Ende abgewinkelt ausgebildet sind. In die Seitenwände 343 sind jeweils diametral zueinander jeweils zwei Bohrungen 344 eingebracht. In dem Boden 341 ist weiterhin eine Bohrung 3411 zur Befestigung des Gehäuses 34 mit dem Verbindungsteil 4 mittels eines Nietes oder einem sonstigen Befestigungsmittel eingebracht, der - wie zuvor beschrieben - durch den zwischen Verbindungsteil 4 und Spannverschluss 3 geführten Spanngurt 2 geführt ist.

Durch die in Höhe der Bohrung 3414 des Bodens 341 angeordneten Bohrungen 344 der Seitenwände 343 ist eine Achsschraube 38 zur schwenkbaren Befestigung eines Sperrhebels 36 geführt. Der Sperrhebel 36 ist an seinem freien Ende keilförmig ausgebildet und greift in die Verzahnung 351 einer Zahnwalze 35 ein, die auf einer weiteren Achsschraube 38, die durch die weiteren Bohrungen 344 der Seitenwand 343 geführt ist, rotierbar gelagert ist. Das keilförmig ausgebildete Ende des Sperrhebels 36 wirkt mit der Verzahnung 351 der Zahnwalze 35 derart zusammen, dass eine Rotation der Zahnwalze 35 nur in Bewegungsrichtung des Spanngurts 2 in Spannrichtung ermöglicht ist, wohingegen die Rotation der Zahnwalze 35 entgegen der Spannrichtung des Spanngurts durch den Sperrhebel 36 blockiert ist. Auf seiner dem Boden 341 des Gehäuses 34 entgegengerichteten Oberseite ist in den Sperrhebel 36 quer zu diesem eine Nut 362 eingebracht, in die eine Doppelschenkelfeder 37 eingreift, die beidseitig des Sperrhebels 36 auf die diesen aufnehmende Achsschraube 38 aufgefädelt ist. Über die Doppelschenkelfeder 37 ist der Sperrhebel 36 gegen die Verzahnung 351 der Zahnwalze 35 vorgespannt.

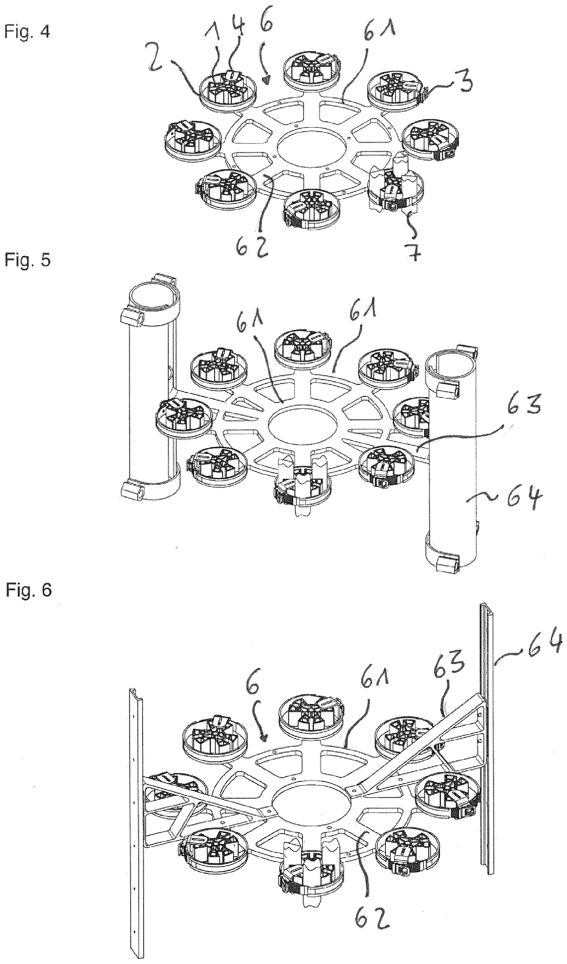

In Figur 4 ist eine Loopscheibe 6 dargestellt, die mit Vorrichtungen zur Befestigung von Leitungen in der zuvor beschriebenen Art bestückt ist. Die Loopscheibe 6 ist aus zwei konzentrisch zueinander angeordneten, kreisringförmigen Tragkörpern 61 gebildet, welche über sternförmig angeordnete, radiale Kragarme 62 miteinander verbunden sind, welche über den äußeren ringförmigen Tragkörper 61 hinausragen und die endseitig mit Klemmstücken 1 der zuvor beschriebenen Vorrichtungen bestückt sind. Im Ausführungsbeispiel sind die Kragarme 62 endseitig mit Bohrungen zur Aufnahme der Achse 16 des Klemmstücks 1 sowie eines Federstifts 53 versehen, so dass diese die Funktion des vorstehend beschriebenen Beschlages 5 erfüllen. Ein separater Beschlag 5 ist daher nicht erforderlich.

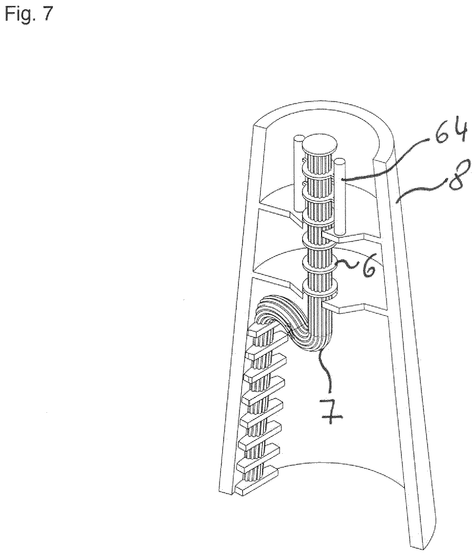

Im Ausführungsbeispiel gemäß Figur 5 sind diametral zueinander jeweils zwischen zwei Kragarmen 62 zwei Führungsarme 63 angeformt, die jeweils in einer Führungsschiene 64 geführt sind. Die gegenüberliegend angeordneten Führungsschienen 64 können innerhalb des Turms 8 einer - nicht dargestellten - Windkraftanlage fixiert werden, wodurch die Loopscheibe 6 axial verschiebbar, jedoch radial fixiert angeordnet werden kann. Eine beispielhafte Anordnung einer solchen in einer Führungsschiene 64 geführten Loopscheibe 6 ist in Figur 7 dargestellt. Hier kommen sowohl in Führungsschienen 64 geführte Loopscheiben 6, als auch frei schwebend angeordnete Loopscheiben 6 zum Einsatz, durch welche die Leitungen 7 strangförmig geführt sind. Die Darstellung in Figur 7 ist lediglich eine sehr grobe Funktionsskizze, welche die Positionierung von Loopscheiben 6 innerhalb eines Turms 8 zeigt. Die einzelnen Anordnungen der Klemmstücke 1 und Spanngurte 2 umfassenden Befestigungsvorrichtungen sind hier im Einzelnen nicht gezeigt. Am fußseitigen Ende des Turms 8 sind weiterhin Konsolen angeordnet auf denen zur Fixierung der Leitungen 7 Vorrichtungen gemäß Figur 1 über Beschläge 5 befestigt sind.

In Figur 6 ist eine weitere Ausgestaltung einer mit Klemmstücken 1 bestückten Loopscheibe 6 gezeigt, welche in Führungsschienen 64 geführt ist. Im Gegensatz zu der Anordnung gemäß Figur 5, wo die Führungsschienen rohrförmig ausgebildet sind, sind die Führungsschienen 64 im Ausführungsbeispiel gemäß Figur 6 als C-Profile ausgebildet. Hierbei sind die Führungsarme 63 als Winkelstücke ausgeformt.

## Patentansprüche

1. Loopscheibe (6) mit einem kreisförmigen Tragkörper (61), an dem wenigstens zwei Kragarme (62) radial sternförmig angeformt sind und die je eine Vorrichtung zur Befestigung von Leitungen, insbesondere Stromkabeln, Rohren oder Schläuchen aufnehmen, jede Vorrichtung umfassend wenigstens zwei miteinander verbindbare Befestigungsteile, welche im montierten Zustand wenigstens eine Durchführung bilden, **dadurch gekennzeichnet, dass** die Befestigungsteile ein Klemmstück (1) und wenigstens einen mit diesem verbindbaren Spanngurt (2) umfassen, wobei das Klemmstück (1) wenigstens eine Einsenkung (13) zur Aufnahme einer Leitung (7) aufweist und wobei der Spanngurt (2) einen Spannverschluss (3) aufweist, über den der Spanngurt (2) zumindest bereichsweise um das Klemmstück (1) die wenigstens eine Einsenkung (13) überdeckend verspannbar ist.

2. Loopscheibe nach Anspruch 1, **dadurch gekennzeichnet, dass** der Spanngurt (2) an einem Ende mit einer Verzahnung (21) versehen ist, die mit einem Spannteil des Spannverschlusses (3) zusammenwirkt.

3. Loopscheibe nach Anspruch 2, **dadurch gekennzeichnet, dass** der Spanngurt (2) einteilig ausgebildet ist und an seinem eine Ende den Spannverschluss (3) aufweist und an seinem anderen Ende mit der Verzahnung (21) versehen ist.

4. Loopscheibe nach Anspruch 3, **dadurch gekennzeichnet, dass** der Spannverschluss (3) mit einem Verbindungsteil (4) versehen ist, mit dem er an dem Klemmstück (1) befestigbar ist.

5. Loopscheibe nach Anspruch 2, **dadurch gekennzeichnet, dass** der Spanngurt (2) aus zwei Teilgurten gebildet ist, die jeweils an einem ersten Ende mit einem Verbindungsteil (4) versehen sind, mit dem sie an dem Klemmstück (1) befestigbar sind, wobei ein Teilgurt an seinem zweiten Ende den Spannverschluss (3) aufweist und der andere Teilgurt an seinem zweiten Ende mit der Verzahnung (21) versehen ist.

6. Loopscheibe nach Anspruch 4 oder 5, **dadurch gekennzeichnet, dass** wenigstens ein Verbindungsteil (4) einen Zylinderstift (43) aufweist, der in eine hierfür in dem Klemmstück (1) angeordnete Rastnut (15) einrastbar ist.

7. Loopscheibe nach einem der Ansprüche 2 bis 6, **dadurch gekennzeichnet, dass** das Spannteil des Spannverschlusses (3) durch einen schwenkbar angeordneten Spannhebel (32) gebildet ist, der endseitig zum Eingriff in die Verzahnung (21) des Spanngurts (2) mit dieser korrespondierend ausgebildet ist.

8. Loopscheibe nach Anspruch 7, **dadurch gekennzeichnet, dass** beabstandet zur Schwenkachse des Spannhebels (32) eine Sperrraste (33) zum Eingriff in die Verzahnung (21) des Spanngurts (2) schwenkbar und bevorzugt gegen die Verzahnung eines vom Spannverschluss (3) aufgenommenen Spanngurtabschnitts vorgespannt angeordnet und derart ausgebildet ist, dass ein Verschwenken nur bei Bewegung des Spanngurts (2) in Spannrichtung ermöglicht ist, wohingegen entgegen der Spannrichtung des Spanngurts (2) eine Klemmwirkung erzielt ist.

9. Loopscheibe nach einem der Ansprüche 2 bis 6, **dadurch gekennzeichnet, dass** das Spannteil des Spannverschlusses (3) durch eine drehbar angeordnete Zahnwalze (35) gebildet ist, deren Verzahnung (351) mit der Verzahnung (21) des Spanngurtes (2) korrespondiert.

10. Loopscheibe nach Anspruch 9, **dadurch gekennzeichnet, dass** ein Sperrhebel (36) schwenkbar angeordnet ist, der in die Verzahnung (351) der Zahnwalze (35) bevorzugt gegen diese vorgespannt eingreift und derart ausgebildet ist, dass eine Rotation der Zahnwalze (35) nur in Bewegungsrichtung des Spanngurts (2) in Spannrichtung ermöglicht ist, wohingegen die Rotation der Zahnwalze (35) entgegen der Spannrichtung des Spanngurts (2) blockiert ist.

11. Loopscheibe nach einem der vorgenannten Ansprüche, **dadurch gekennzeichnet, dass** das Klemmstück (1) drehbar und/oder verschiebbar mit einem Beschlag (5) zur Befestigung an einer Wand verbunden ist, wobei bevorzugt ein Arretierteil zur Festlegung des Klemmstücks (1) in einer Dreh- oder Schiebestellung angeordnet ist.

12. Loopscheibe nach Anspruch 11, **dadurch gekennzeichnet, dass** das Arretierteil durch einen Federstift (53) gebildet ist, der in eine in dem Klemmstück (1) hierzu angeordnete Stiftaufnahme einbringbar ist.

13. Loopscheibe nach einem der vorgenannten Ansprüche, **dadurch gekennzeichnet, dass** diametral gegenüberliegend zwei Führungsarme (63) angeordnet sind, die jeweils in eine Führung zweier gegenüberliegend angeordneter, axial zur Loopscheibe (6) verlaufender Führungsschienen (64) eingreifen.

## Claims

1. Loop disc (6) having a circular support body (61), on which at least two cantilever arms (62) are radially moulded in a star shape and which each receive a device for the fixing of lines, particularly power cables, pipes or hoses, each device comprising at least two interconnectable fasteners, which form at least one bushing in the mounted state, **characterised in that** the fasteners comprise a clamping piece (1) and at least one clamping belt (2) connectable thereto, wherein the clamping piece (1) has at least one depression (13) for receiving a line (7) and wherein the clamping belt (2) has a clamp fastener (3), via which the clamping belt (2) is at least partially clampable around the clamping piece (1) covering the at least one depression (13).

2. Loop disc according to claim 1, **characterised in that** the clamping belt (2) is provided with a toothing (21) on one end, which interacts with a clamping part of the clamp fastener (3).

3. Loop disc according to claim 2, **characterised in that** the clamping belt (2) is made in one piece and has a clamp fastener (3) on its one end and is provided with a toothing (21) on its other end.

4. Loop disc according to claim 3, **characterised in that** the clamp fastener (3) is provided with a connecting element (4), by means of which it is fixable to the clamping piece (1).

5. Loop disc according to claim 2, **characterised in that** the clamping belt (2) is made of two partial belts, each of which are provided at a first end with a connecting element (4), by means of which they can be fixed to the clamping piece (1), wherein one partial belt has the clamp fastener (3) at its second end and the other partial belt is provided with the toothing (21) at its second end.

6. Loop disc according to claim 4 or 5, **characterised in that** at least one connecting element (4) has a cylinder pin (43), which is can be latched in a latching groove (15) arranged in the clamping piece (1) for this purpose.

7. Loop disc according to one of claims 2 to 6, **characterised in that** the clamping part of the clamp fastener (3) is formed by a pivotably arranged clamping lever (32), which is designed to be engaged in the toothing (21) of the clamping belt (2) corresponding therewith.

8. Loop disc according to claim 7, **characterised in that** a lock pin (33) is arranged at a distance from the swivel axis of the clamping lever (32) for engagement in the toothing (21) of the clamping belt (2) pivotably and preferably prestressed against the toothing of a clamping belt section received by the clamp fastener (3) and is designed in a manner that pivoting is only allowed for by movement of the clamping belt (2) in the clamping direction, whereas a clamping effect is achieved counter to the clamping direction of the clamping belt (2).

9. Loop disc according to one of claims 2 to 6, **characterised in that** the clamping part of the clamp fastener (3) is formed by a rotatably arranged toothed roller (35), the toothing (351) of which corresponds with the toothing (21) of the clamping belt (2).

10. Loop disc according to claim 9, **characterised in that** a locking lever (36) is pivotably arranged, which engages in the toothing (351) of the toothed roller (35) preferably prestressed against same and is designed in a manner that a rotation of the toothed roller (35) is only allowed for in the direction of movement of the clamping belt (2) in the clamping direction, whereas the rotation of the toothed roller (35) counter to the clamping direction of the clamping belt (2) is blocked.

11. Loop disc according to one of the previous claims, **characterised in that** the clamping piece (1) is rotatably and/or movably connected to a fitting (5) for fixing on a wall, wherein preferably a locking part for fixing the clamping piece (1) in a rotational or slide position is arranged.

12. Loop disc according to claim 11, **characterised in that** the locking part is formed by a spring pin (53), which is insertable in a pin receptacle arranged in the clamping piece (1) for this purpose.

13. Loop disc according to one of the previous claims, **characterised in that** two guide arms (63) are arranged diametrically opposed from one another, which each engage in a guide of two oppositely arranged guide rails (64) running axially towards the loop disc (6).

## Revendications

1. Disque ajouré (6), comprenant un corps porteur (61) de forme circulaire contre lequel ont été formés radialement en étoile au moins deux bras en porte-à-faux (62) et qui reçoivent chacun un dispositif servant à fixer des lignes/conduites, en particulier des câbles électriques, des tuyaux ou des flexibles, chaque dispositif comprenant au moins deux pièces de fixation reliables entre elles et qui à l'état monté forment au moins un passage, **caractérisé en ce que** les pièces de fixation comprennent une pièce de bridage (1) et au moins une sangle de serrage (2) reliable avec ladite pièce, sachant que la pièce de bridage (1) présente au moins un enfoncement (13) lui permettant de recevoir une ligne/conduite (7) et sachant que la sangle de serrage (2) présente une fermeture à genouillère (3) via la quelle il est possible de tendre la sangle de serrage (2) au moins localement autour de la pièces de bridage (1) en recouvrant au moins un enfoncement (13).

2. Disque ajouré selon la revendication 1, **caractérisé en ce que** la sangle de serrage (2) est dotée à une extrémité d'une denture (21) qui interagit avec une pièce de tensionnement de la fermeture à genouillère (3).

3. Disque ajouré selon la revendication 2, **caractérisé en ce que** la sangle de serrage (2) est configurée monobloc et qu'elle présente à l'une de ses extrémités la fermeture à genouillère (3) et qu'à l'autre extrémité elle est munie de la denture (21).

4. Disque ajouré selon la revendication 3, **caractérisé en ce que** la fermeture à genouillère (3) est munie d'une pièce de liaison (4) avec laquelle elle peut être fixée contre la pièce de bridage (1).

5. Disque ajouré selon la revendication 2, **caractérisé en ce que** la sangle de serrage (2) est formée par deux sangles partielles munies chacune, à une première extrémité, d'une pièce de liaison (4) par laquelle elles peuvent être fixées contre la pièces de bridage (1), sachant qu'une sangle partielle présente à sa seconde extrémité la fermeture à genouillère (3) et que l'autre sangle partielle est munie, à sa seconde extrémité, de la denture (21).

6. Disque ajouré selon la revendication 4 ou 5, **caractérisé en ce qu'**au moins une pièce de liaison (4) présente une tige cylindrique (43) qui peut encranter dans une gorge (15) disposée à cet effet dans la pièce de bridage (1).

7. Disque ajouré selon l'une des revendications 2 à 6, **caractérisé en ce que** la pièce de tensionnement de la fermeture à genouillère (3) est formée par un levier de tensionnement (32) disposé de manière à pouvoir pivoter, levier qui à une extrémité est configuré pour engrener dans la denture (21) de la sangle de serrage (2) en épousant ladite denture.

8. Disque ajouré selon la revendication 7, **caractérisé en ce qu'**à distance de l'axe de pivotement du levier de tensionnement (32) est disposé, de manière pivotante, un cran de verrouillage (33) destiné à engrener dans la denture (21) de la sangle de serrage (2), et de préférence précontraint contre la denture d'un segment de sangle de serrage reçu par la fermeture à genouillère (3) et que ce cran est configuré de sorte qu'un pivotement n'est rendu possible que lors d'un déplacement de la sangle de serrage (2) dans le sens du tensionnement, sachant qu'inversement un effet de bridage est obtenu en sens inverse de celui de tensionnement de la sangle de serrage (2).

9. Disque ajouré selon l'une des revendications 2 à 6, **caractérisé en ce que** la partie tendeuse de la fermeture à genouillère (3) est formée par un rouleau denté (35) disposé de sorte à pouvoir tourner, dont la denture (351) épouse la denture (21) de la sangle de serrage (2).

10. Disque ajouré selon la revendication 9, **caractérisé en ce qu'**est disposé de façon à pourvoir pivoter un levier de blocage (36) qui engrène dans la denture (351) du rouleau denté (35) en étant de préférence précontraint contre lui et qu'il est configuré de sorte qu'une rotation du rouleau denté (35) ne soit possible que dans le sens de déplacement de la sangle de serrage (2) dans le sens de tensionnement, sachant qu'inversement la rotation du rouleau denté (35) en sens inverse de celui de tensionnement de la sangle de serrage (2) est bloqué.

11. Disque ajouré selon l'une des revendications précédentes, **caractérisé en ce que** la pièce de bridage (1) est reliée, tout en pouvant tourner ou être déplacée, à une ferrure (5) pour la fixer contre un mur, sachant qu'est disposée de préférence une pièce de retenue servant à immobiliser la pièce de bridage (1) sur une position de rotation ou de déplacement.

12. Disque ajouré selon la revendication 11, **caractérisé en ce que** la pièce de retenue est formée par une goupille élastique (53) qui peut être introduite dans un logement à cet effet disposé dans la pièce de bridage (1).

13. Disque ajouré selon l'une des revendications précédentes, **caractérisé en ce que** sont disposés deux bras de guidage (63) diamétralement opposés qui chacun engrènent dans un guidage de deux rails de guidage (64) disposés se faisant face et présentant un tracé axial par rapport au disque ajouré (6).
